# EUROPEAN PATENT APPLICATION

(11) **EP 3 144 764 A1**
(43) Date of publication of application: **22.03.2017**
(21) Application number: 16170122.2
(22) Date of filing: 31.05.2013
(51) Int. Cl.: G05B 23/02, G05B 19/048, G01D 21/00

(54) **SENSOR HIERARCHY**

(30) Priority: 12.12.2012 US 201213712077
(62) Divisional of application: 13862250.1
(71) Applicant: INTEL Corporation, Santa Clara, CA 95052 (US)
(72) Inventor: MEYER, Thorsten, 93053 Regensburg (DE); LUEBBERS, Eno, 86177 Munchen (DE); LYAKH, Mikhail, 603159 Nizhniy, Novgorod (RU); KINSELLA, Ray, Shannon (IE)
(74) Representative: Rodriguez, Sarah Janelle

(57) **Abstract**

In the present disclosure sensors are organized based on a hierarchy, i.e. an arrangement of sensors into leveled groups. The sensors system, comprises:
a first sensor (106) to generate information about an event (102);
a second sensor (110) to generate information about the event; and
control circuitry to control the second sensor (110) based on the information about the event generated by the first sensor (106).

## Description

### CROSS-REFENCE TO RELATED APPLICATIONS

The present patent application claims priority to U.S. Patent Application Serial No. 13/712,077 filed December 12, 2012, the content of which is incorporated herein by reference in its entirety.

### TECHNICAL FIELD

The present disclosure relates to systems comprising sensors, and more particularly, to systems configured to activate different sensors at different times based on a sensing strategy.

### BACKGROUND

Advances in electronic technology continue to bring new devices to the marketplace. For example, emerging devices may be smaller, faster and more powerful than their predecessors. In addition, these devices may possess desirable features like the ability to communicate wirelessly. While these advances have focused mainly on functionality benefitting user experience, recently more consideration has been given to the environment in which these systems/devices operate. For example, more complex technologies typically imply higher power requirements, which may be a cause for concern in many areas. For example, system-level resource consumption may be an issue in areas where populations may be growing and resources may be scarce. On a different scale, power consumption is always problematic for mobile devices like, for example, laptops, notebooks, tablet computers, mobile handsets, smart phones, etc. where batteries are relied upon.

Moreover, the ability to perform more tasks electronically has made electronic security a larger issue. Users are more often turning to their mobile devices to convey confidential and/or sensitive information, and thus, the interception of this information is a growing temptation for those with improper or possibly even criminal motives. The beneficial functionality provided by a user's device may then be converted into a substantial liability, wherein the ability to so easily convey information may become a vulnerability. These concerns may move even further to the forefront due to the emergence of systems supporting wireless electronic payment. Already seen in credit cards possessing radiofrequency identification (RFID) components, methods are being devised to wirelessly intercept or steal payment information for use in authorized transactions. Thus, user's become hesitant to take advantage of the benefits of new functionalities that are offered because of the costs that must be paid in energy consumption, security vulnerability, etc.

### BRIEF DESCRIPTION OF THE DRAWINGS

Features and advantages of various embodiments of the claimed subject matter will become apparent as the following Detailed Description proceeds, and upon reference to the Drawings, wherein like numerals designate like parts, and in which:
FIG. 1 illustrates an example system configured with a sensor hierarchy in accordance with at least one embodiment of the present disclosure;
FIG. 2 illustrates an example configuration for a device usable in accordance with at least one embodiment of the present disclosure;
FIG. 3 illustrates an example fire monitoring system configured with a sensor hierarchy in accordance with at least one embodiment of the present disclosure;
FIG. 4 illustrates an example Global Position System (GPS) receiver control system configured with a sensor hierarchy in accordance with at least one embodiment of the present disclosure;
FIG. 5 illustrates an example payment system configured with a sensor hierarchy in accordance with at least one embodiment of the present disclosure; and
FIG. 6 illustrates example operations for a system including a sensor hierarchy in accordance with at least one embodiment of the present disclosure.

Although the following Detailed Description will proceed with reference being made to illustrative embodiments, many alternatives, modifications and variations thereof will be apparent to those skilled in the art.

### DETAILED DESCRIPTION

This disclosure is directed to systems and/or devices configured with a sensor hierarchy. For example, sensor hierarchy may be implemented in large architectures comprising networked systems including multiple computing devices. It is also possible to implement sensor hierarchy in individual devices such as in mobile computing devices, mobile communication devices, etc. The example systems and /or devices disclosed herein are intended merely for use in explaining various embodiments consistent with the present disclosure, and are not meant to limit the various embodiments to implementations employing only particular systems and/or devices.

In general, systems/devices consistent with the present disclosure may be configured to interact with (e.g., receive information from and/or control the operation of) sensors organized based on a hierarchy. The term hierarchy, as referenced herein, may describe an arrangement of items (e.g., sensors) into leveled groups organized based on at least one criterion including, for example, ability, complexity, energy consumption, etc. In one embodiment, a system/device may comprise, for example, at least one first level sensor, at least one second level sensor and a sensor control module. The first level sensor may be configured to generate first level sensor information based on sensing an event. The sensor module may be configured to control operation of the at least one second level sensor based on the first level sensor information.

For example, the at least one first level sensor may be configured to sense at least one of temperature, illumination, sound, tilt, proximity, touch, movement, acceleration, orientation, condition changes or presence of wireless communication signals, whereas the at least one second level sensor may be configured to sense at least one of image information, video information or may be configured to receive wireless communication signals. In controlling the second level sensor, the sensor module may be configured to activate the second level sensor based on the first level sensor information indicating the sensing of an event. Upon activation, the second level sensor may then be configured to generate second level sensor information based on sensing related to the event. In the same or a different embodiment, the sensor module may be further configured to deactivate the at least one second level sensor based on the second level sensor information indicating that the event is complete. In one embodiment, the at least one first level sensor, when operational, may consume less power that the at least one second level sensor, when operational. In the same or another embodiment, there may be one first level sensor and a plurality of second level sensors.

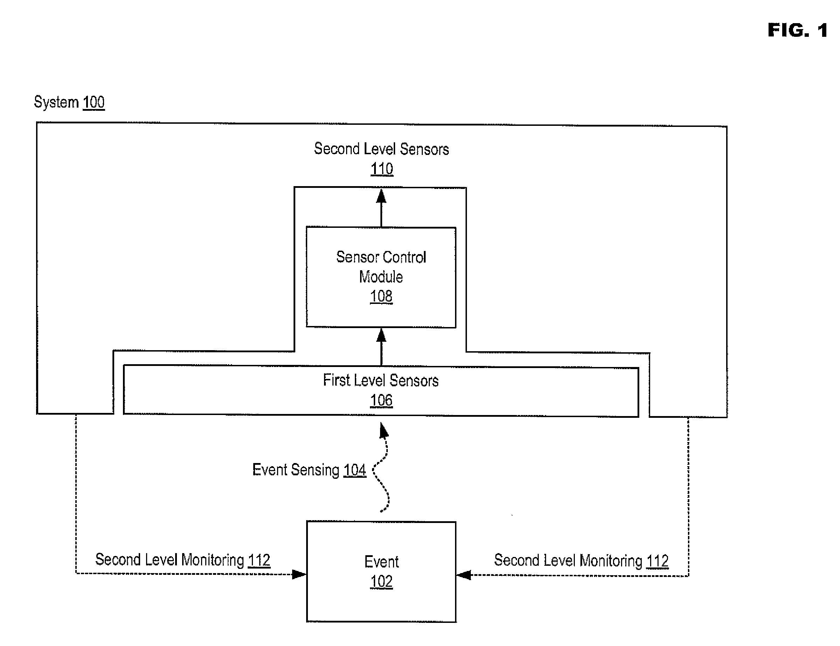

FIG. 1 illustrates example system 100 configured with a sensor hierarchy in accordance with at least one embodiment of the present disclosure. It is important to note that, as set forth above, that while FIG. 1 discloses a system that the illustrated embodiment is also applicable to a device. System 100 may include, for example, first level sensors 106, sensor control module 108 and second level sensors 110. In one embodiment, first level sensors 106 may be simple, low-power sensors usable to detect an initial condition indicating to sensor control module 108 the need for more complex, and possibly more comprehensive second level sensors 110. In another embodiment, an event sensed by a single first level sensor 106 may cause sensor control module 108 to then activate a plurality of second level sensors 110 (e.g., of the same or a different type) to, for example, provide sensor coverage over a wider area, provide finer sensor resolution, etc. Operating in accordance with embodiments such as described above allows for the conservation of system resources (e.g., processing capacity, power, etc.) during normal operation and the appropriate application of system resources for secondary or higher resolution sensing (e.g., second level sensors 110) when necessary (e.g., when first level sensors 106 sense event 102).

First level sensors 106 may be, for example, more simplistic detectors used to detect the occurrence of an event. First level sensors 106 may sense basic conditions such as, for example, temperature, illumination, sound, proximity, touch, movement, acceleration, orientation, tilt, condition change or presence of wireless communication signals. In one example implementation, first level sensors 106 may sense conditions existing outside of system 100. For example, sensors may be configured to sense the temperature inside and/or outside a structure, movement inside and/or outside the structure, whether the lights are on the in structure, listen for sound emanating inside and/or outside the structure, etc. In addition to structures, first level sensors 106 may also be configured to sense condition changes in apparatuses (e.g., vehicles, appliances, air conditioning systems, computing equipment, manufacturing machinery, etc.) or even an organic body. For example, first level sensors 106 may be configured to sense changes in human and/or animal respiration, pulse, blood pressure, blood chemistry, movement of extremities or other bodily condition changes. In addition, conditions may also be sensed with respect to the system/device itself, such as the tilt/orientation of a device, organic body proximity to a device, listen for spoken commands to a device, if wireless signals are sensed in proximity to a device, etc. The events sensed by first level sensors 106 may be used by sensor control module 108 in determining whether to activate second level sensors 110. Second level sensors 110 may provide, for example, higher resolution sensing, alternative types of sensing, increased sensing coverage (e.g., over a wider area), etc. in regard to a detected event. In one embodiment, second level sensors 110 may include image and/or video capture devices (e.g., cameras), higher complexity sensors, signal receivers and/or transceivers, etc., that may consume more energy than first level sensors 106. In another embodiment, second level sensors 110 may include a plurality of additional sensors of the same or different type configured to provide greater sensing coverage. Employing second level sensors 110 only when necessary may help system 100 to conserve resources, may serve to enhance security in system 100, etc.

In general, an example overview of operation in system 100 may include event 102 being sensed by first level sensors 106 as shown at 104. First level sensors may be configured to then provide first level sensor information to sensor control module 108. Sensor control module 108 may be configured to then make a determination, based on the first level sensor information, as to whether to activate second level sensors 110. If it is determined that second level sensors 110 should be activated, then second level monitoring 112 may commence related to event 102.

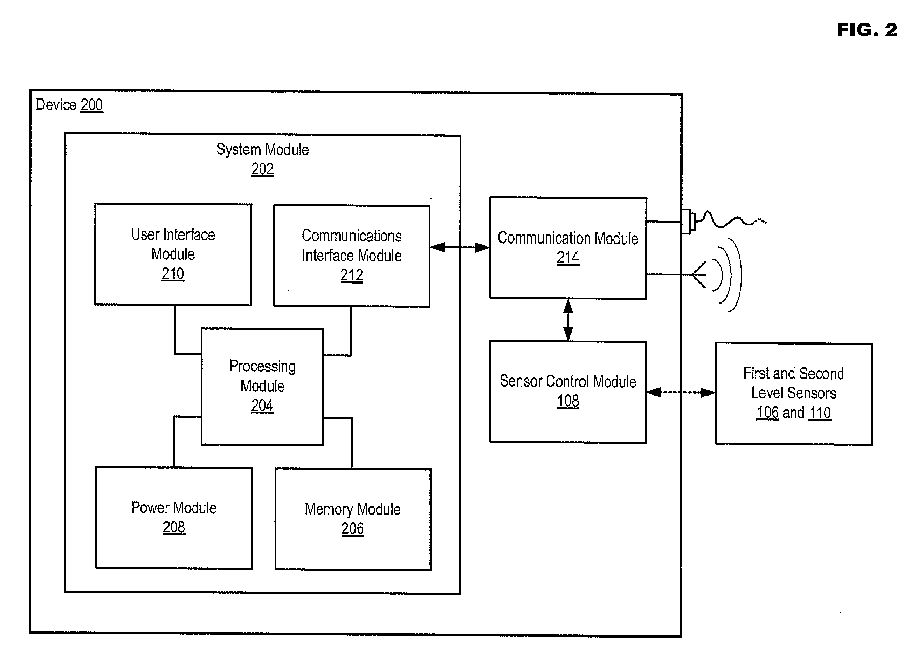

FIG. 2 illustrates an example configuration for device 200 usable in accordance with at least one embodiment of the present disclosure. For example, device 200 may be part of system 100 (e.g., networked with other devices making up system 100). Alternatively, device 200 may be a solitary device configured with sensor hierarchy (e.g., device 100 may comprise at least first level sensors 106, sensor control module 108 and second levels sensors 110 as shown in FIG. 1). Examples of device 200 may include, but are not limited to, mobile communication devices such as cellular handsets or smartphones based on the Android@ operating system (OS), iOS®, Blackberry® OS, Palm® OS, Symbian® OS, etc., mobile computing devices such as tablet computers like an iPad®, Galaxy Tab®, Kindle Fire®, etc., an Ultrabooks® including a low-power chipset manufactured by Intel Corporation, netbooks, notebooks, laptops, palmtops, etc., and typically stationary computing devices such as a desktops, servers, etc.

Device 200 may be, for example, comprise system module 202 configured to generally manage device operations. System module 202 may include, for example, processing module 204, memory module 206, power module 208, user interface module 210 and communication interface module 212 that may be configured to interact with communication module 214. Device 200 may also comprise sensor control module 108 configured to interact with first level sensors 106 and second level sensors 110. While communication module 214 and sensor control module 108 are shown as separate from system module 202, this is merely for the sake of explanation herein. Some or all of the functionality associated with communication module 212 and/or sensor control module 108 may also be incorporated into system module 200. Moreover, first level sensors 106 and second level sensors 110 may also be incorporated within device 200.

In device 200, processing module 204 may comprise one or more processors situated in separate components, or alternatively, may comprise one or more processing cores embodied in a single component (e.g., in a System-on-a-Chip (SOC) configuration) and any processor-related support circuitry (e.g., bridging interfaces, etc.). Example processors may include various x86-based microprocessors available from the Intel Corporation including those in the Pentium, Xeon, Itanium, Celeron, Atom, Core i-series product families. Examples of support circuitry may include chipsets (e.g., Northbridge, Southbridge, etc. available from the Intel Corporation) configured to provide an interface through which processing module 204 may interact with other system components that may be operating at different speeds, on different buses, etc. in device 200. Some or all of the functionality commonly associated with the support circuitry may also be included in the same physical package as the processor (e.g., an SOC package like the Sandy Bridge integrated circuit available from the Intel Corporation).

Processing module 204 may be configured to execute various instructions in device 200. Instructions may include program code configured to cause processing module 204 to perform activities related to reading data, writing data, processing data, formulating data, converting data, transforming data, etc. Information (e.g., instructions, data, etc.) may be stored in memory module 206. Memory module 206 may comprise random access memory (RAM) or read-only memory (ROM) in a fixed or removable format. RAM may include memory configured to hold information during the operation of device 200 such as, for example, static RAM (SRAM) or Dynamic RAM (DRAM). ROM may include memories such as bios memory configured to provide instructions when device 200 activates, programmable memories such as electronic programmable ROMs (EPROMS), Flash, etc. Other fixed and/or removable memory may include magnetic memories such as, for example, floppy disks, hard drives, etc., electronic memories such as solid state flash memory (e.g., embedded multimedia card (eMMC), etc.), removable memory cards or sticks (e.g., micro storage device (uSD), USB, etc.), optical memories such as compact disc-based ROM (CD-ROM), etc. Power module 208 may include internal power sources (e.g., a battery) and/or external power sources (e.g., electromechanical or solar generator, power grid, fuel cell, etc.), and related circuitry configured to supply device 200 with the power needed to operate.

User interface module 210 may include circuitry configured to allow users to interact with device 200 such as, for example, various input mechanisms (e.g., microphones, switches, buttons, knobs, keyboards, speakers, touch-sensitive surfaces, one or more sensors configured to capture images and/or sense proximity, distance, motion, gestures, etc.) and output mechanisms (e.g., speakers, displays, lighted/flashing indicators, electromechanical components for vibration, motion, etc.). Communication interface module 212 may be configured to handle packet routing and other control functions for communication module 214, which may include resources configured to support wired and/or wireless communications. Wired communications may include serial and parallel wired mediums such as, for example, Ethernet, Universal Serial Bus (USB), Firewire, Digital Visual Interface (DVI), High-Definition Multimedia Interface (HDMI), etc. Wireless communications may include, for example, close-proximity wireless mediums (e.g., radio frequency (RF) such as based on the Near Field Communications (NFC) standard, infrared (IR), optical character recognition (OCR), magnetic character sensing, etc.), short-range wireless mediums (e.g., Bluetooth, WLAN, Wi-Fi, etc.) and long range wireless mediums (e.g., cellular, satellite, etc.). In one embodiment, communication interface module 212 may be configured to prevent wireless communications that are active in communication module 214 from interfering with each other. In performing this function, communication interface module 212 may schedule activities for communication module 214 based on, for example, the relative priority of messages awaiting transmission.

In one embodiment, sensor control module 108 may be a separate module in device 200. However, it is also possible for some or all of sensor control module 108 to be embodied in software stored in memory module 206 and executed by processing module 204. Sensor control module 108 may be configured to at least receive first level sensor information from first level sensors 106 and to activate second level sensors 110 based on the first level sensor information indicating that an event has been sensed. Sensor control module 108 may also be configured to receive second level sensor information, and to deactivate second level sensors 110 based on the second level sensor information indicating that the event is complete. In one embodiment, first level sensors 106 and/or second level sensors 110 may be external to device 200, and sensor control module 108 may be configured to interact with first level sensors 106 and/or second level sensors 110 via communication module 214 (e.g., if first level sensors 106 and/or second level sensors 110 are configured to interact using any of the above example wired/wireless mediums). Otherwise, first level sensors 106 and/or second level sensors 110 may communicate with sensor control module 108 via direct wiring interfaces, using proprietary wired/wireless protocols, etc.

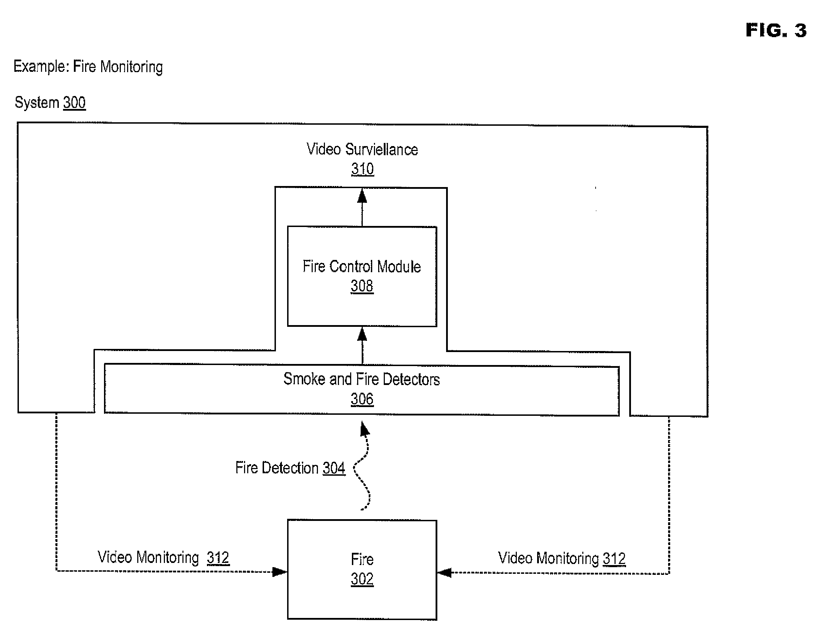

FIG. 3 illustrates example fire monitoring system 300 configured with a sensor hierarchy in accordance with at least one embodiment of the present disclosure. The general elements that were depicted in FIG. 1 are given specific purpose in FIG. 3-5 in order to explain how various systems and/or devices may function with, and benefit from, a sensor hierarchy consistent with the present disclosure. For example, system 300 may be configured to monitor a structure (e.g., a home, office building, arena, etc.) and may include first level sensors (smoke and fire detectors 306) and second level sensors (video surveillance 310). Smoke and fire detectors may include, for example, smoke sensors and/or heat sensors configured to detect fire 302 within the structure. Video surveillance 310 may include, for example, image and/or video capture devices configured to determine the locations of fires, the location of people that may still be in the structure, etc.

In an example of operation, fire 302 may be detected by smoke and fire detectors 306 as shown at 304. Smoke and fire detectors 306 may provide first sensor information (e.g., may set an alert bit or send an alert signal) to fire control module 308. Fire control module 308 may be configured to make a determination based on the first sensor information. If fire control module 308 determines that the first sensor information indicates that there is a fire, then fire control module 208 may cause video surveillance 310 to activate. Video surveillance 310 may proceed to perform video monitoring 312 related to fire 302. For example, video monitoring 312 may monitor for the locations of fire 302, as well as for anybody that might be trapped by the fire or still yet to evacuate the structure. In this manner fire monitoring may be maintained in a safe and effective manner while still conserving on system resources (e.g., processing and/or power) that would otherwise be consumed if video surveillance 310 was operational on a continuous basis.

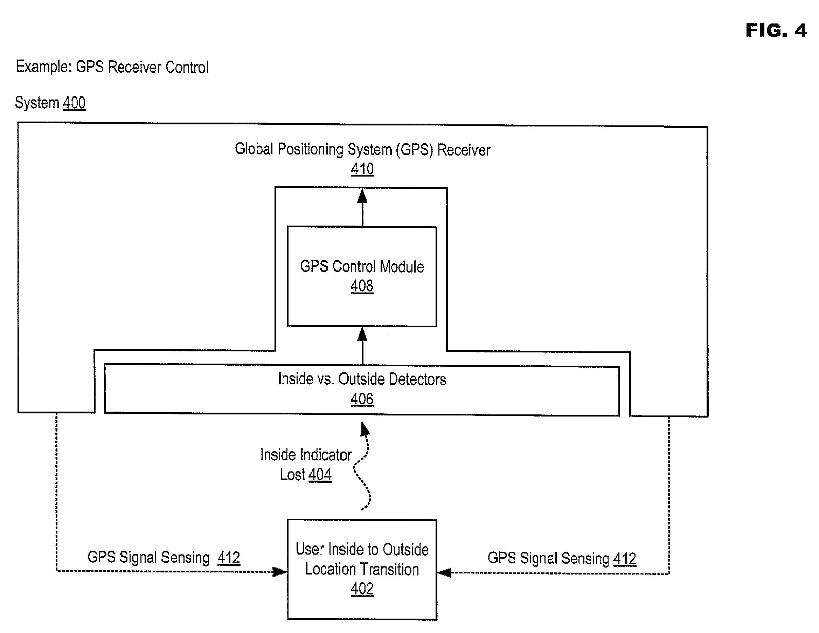

FIG. 4 illustrates example GPS receiver control system 400 configured with a sensor hierarchy in accordance with at least one embodiment of the present disclosure. In this example implementation system 400 may be a device comprising at least GPS receiver 410. When active, GPS receiver 410 may attempt to receive signals from a GPS satellite on a continual basis. GPS signals are not receivable in certain situations such as, for example, when system 400 is indoors. Continued attempts by GPS receiver 410 to acquire a GPS navigation signal when in a situation where the signals are unavailable may result in a needless draining of the battery in system 400.

In accordance with at least one embodiment, first level sensors (e.g., inside vs. outside detectors 406) may be configured to determine when system 400 is in a situation where signals are not receivable from GPS satellites. For example, inside vs. outside detectors may sense the passage between inside and outside based on sensing radio frequency identification (RFID) tags affixed to the portals of a structure (e.g., by transmitting an RF signal and receiving a response from an RFID tag indicating entrance into an environment where GPS signals are not available), by sensing short-range wireless signals proximate to system 400 (e.g., by sensing signals from a wireless access point (AP) within the structure), or by sensing any other condition indicative of whether system 400 is in an area where GPS signals may be available or unavailable.

Inside vs. outside detectors 406 may generate first level sensor information (e.g. setting a bit or sending a signal indicating inside vs. outside), which may be used by GPS control module 408 in determining whether to activate GPS receive 410. If it is determined that system 400 is in an area where GPS signals may be received. If GPS signals are determined to be available based on the first level sensor information, then GPS control module 408 may cause GPS receiver 410 to activate, resulting in GPS signal sensing 412. As a result, GPS sensing may be avoided when GPS signals are not available, which may help to conserve battery power in system 400.

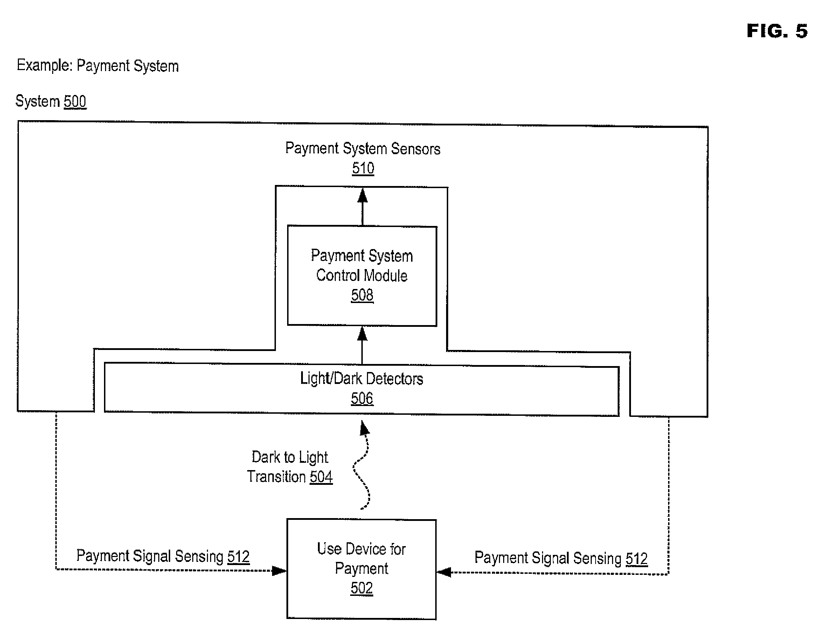

FIG. 5 illustrates example payment system 500 configured with a sensor hierarchy in accordance with at least one embodiment of the present disclosure. As illustrated by the usage example disclosed in FIG. 4, in certain situations it may be beneficial to restrict second level sensor operation to conserve power. However, in the instance of payment system 500, this type of control may also be beneficial from a security standpoint. Wireless payment systems may exchange data between a user device and a payment device in order process a purchase. While this functionality may make purchase transactions easier, it also introduces vulnerability in that others may attempt to intercept this data for use in their own fraudulent purchases. This sort of activity may occur as long as the payment system is active in system 500, which means that the device may still transmit data when in a pocket, purse, bag, etc. In at least one embodiment, first level sensors (e.g., light/dark sensors 506) may be employed to provide input to payment system control module 508 for controlling second level sensors (payment system sensors 510).

In one example of operation, an event may be sensed wherein a device (e.g., system 500) may be used for making an electronic wireless payment. System 500 may be withdrawn from a storage location (e.g., pocket, purse, bag, etc.), which may be sensed by light/dark sensors 506 as shown at 504. First level sensor information (e.g., setting a bit or sending a signal indicating a dark to light transition) may then be provided to payment system control module 508, which may use the first level information in determining whether to activate payment system sensors 510. If it is determined that the situation is appropriate to activate payment system sensors 510 (e.g., that system 500 has been removed from storage in preparation to make a wireless electronic payment as indicated by a dark to light transition), then payment system control module 508 will proceed to activate payment system sensors 510, resulting in payment signal sensing 512. Payment signal sensing 512 may then allow system 500 to provide electronic payment data for making purchases. In this way, payment system sensors 510 may remain inactive in situations where an electronic wireless payment is not needed, allowing system 500 to both conserve power and to prevent electronic payment data from being inadvertently provided to others with criminal intent.

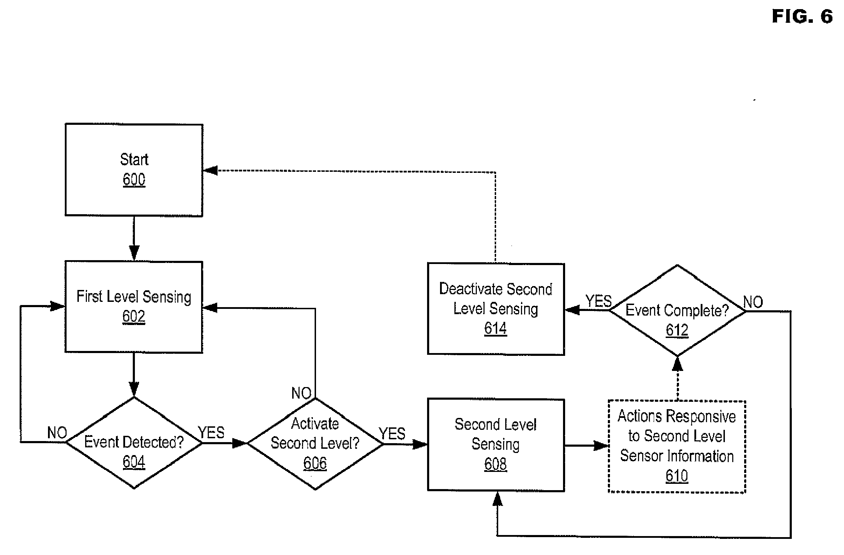

FIG. 6 illustrates example operations for a system including a sensor hierarchy in accordance with at least one embodiment of the present disclosure. Startup in operation 600 may be followed by first level sensing in operation 602. First level sensing may comprise first level sensors generating first level sensor information based on sensing an event. First level sensing may continue in operations 602 and 604 until a determination is made in operation 604 that an event has been sensed. A further determination may then be made in

operation 606 as to whether second level sensing should be activated. The determination in operation 606 may be based on, for example, first level sensor information being generated in response to an event being detected in operation 604. If in operation 606 it is determined that second level sensing should not be activated, then in operation 602 first level sensing may continue. Alternatively, if in operation 606 it is determined that second level sensing should be activated, then in operation 608 second level sensing may initiate. Depending on the system configuration, optional operation 608 may then occur wherein subsequent actions may then take place in response to second level sensor information generated in operation 608. For example, if second level sensors sense people in a structure experiencing a fire or a payment system requesting payment information then an alert may be sent to fire rescue personnel or electronic payment data may be transmitted to proceed with a purchase transaction, etc. A determination may then be made in operation 612 as to whether the event is now complete (e.g., based on the second level sensor information). If in operation 612 it is determined that the event is not complete, then in operation 608 second level sensing may continue. Otherwise, if in operation 612 it is determined that the event is complete then in operation 614 second level sensing may be deactivated. Optionally, operation 614 may be followed by a return to operation 600 to prepare for recommencement of first level sensing.

While FIG. 6 illustrates various operations according to an embodiment, it is to be understood that not all of the operations depicted in FIG. 6 are necessary for other embodiments. Indeed, it is fully contemplated herein that in other embodiments of the present disclosure, the operations depicted in FIG. 6, and/or other operations described herein, may be combined in a manner not specifically shown in any of the drawings, but still fully consistent with the present disclosure. Thus, claims directed to features and/or operations that are not exactly shown in one drawing are deemed within the scope and content of the present disclosure.

As used in any embodiment herein, the term "module" may refer to software, firmware and/or circuitry configured to perform any of the aforementioned operations. Software may be embodied as a software package, code, instructions, instruction sets and/or data recorded on non-transitory computer readable storage mediums. Firmware may be embodied as code, instructions or instruction sets and/or data that arc hard-coded (e.g., nonvolatile) in memory devices. "Circuitry", as used in any embodiment herein, may comprise, for example, singly or in any combination, hardwired circuitry, programmable circuitry such as computer processors comprising one or more individual instruction processing cores, state machine circuitry, and/or firmware that stores instructions executed by programmable circuitry. The modules may, collectively or individually, be embodied as circuitry that forms part of a larger system, for example, an integrated circuit (IC), system onchip (SoC), desktop computers, laptop computers, tablet computers, servers, smart phones, etc.

Any of the operations described herein may be implemented in a system that includes one or more storage mediums having stored thereon, individually or in combination, instructions that when executed by one or more processors perform the methods. Here, the processor may include, for example, a server CPU, a mobile device CPU, and/or other programmable circuitry. Also, it is intended that operations described herein may be distributed across a plurality of physical devices, such as processing structures at more than one different physical location. The storage medium may include any type of tangible medium, for example, any type of disk including hard disks, floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, Solid State Disks (SSDs), embedded multimedia cards (eMMCs), secure digital input/output (SDIO) cards, magnetic or optical cards, or any type of media suitable for storing electronic instructions. Other embodiments may be implemented as software modules executed by a programmable control device.

Thus, the present disclosure is directed to systems and/or devices configured with a sensor hierarchy. In general, systems/devices consistent with the present disclosure may be configured to interact with (e.g., receive information from and/or control the operation of) sensors organized based on a hierarchy. The term hierarchy, as referenced herein, may describe an arrangement of items (e.g., sensors) into leveled groups organized based on at least one criterion including, for example, ability, complexity, energy consumption, etc. In one embodiment, a system/device may comprise, for example, at least one first level sensor, at least one second level sensor and a sensor control module. The first level sensor may be configured to generate first level sensor information based on sensing an event. The sensor module may be configured to control operation of the at least one second level sensor based on the first level sensor information.

The following examples pertain to further embodiments. In one example there is provided a system. The system may include at least one first level sensor to generate first level sensor information based on sensing an event, at least one second level sensor, and a sensor control module to control operation of the at least one second level sensor based on the first level sensor information.

The above example system may be further configured, wherein the at least one first level sensor is further to sense at least one of temperature, illumination, sound, proximity, touch, movement, acceleration, orientation, tilt, condition change or presence of wireless communication signals.

The above example system may be further configured, alone or in combination with the above further configurations, wherein the at least one second level sensor is to sense at least one of sense image information, sense video information or receive wireless communication signals.

The above example system may be further configured, alone or in combination with the above further configurations, wherein the sensor control module is further to activate the at least one second level sensor based on the first level sensor information indicating the sensing of an event.

The above example system may be further configured, alone or in combination with the above further configurations, wherein the at least one second level sensor is to generate second level sensor information based on sensing related to the event. In this configuration the example system may be further configured, wherein the sensor control module is further to deactivate the at least one second level sensor based on the second level sensor information indicating that the sensed event is complete.

The above example system may be further configured, alone or in combination with the above further configurations, wherein the at least one first level sensor, when operational, consumes less power than the at least one second level sensor, when operational.

The above example system may be further configured, alone or in combination with the above further configurations, wherein the at least one first level sensor comprises a single sensor and the at least one second level sensor comprises a plurality of sensors.

The above example system may be further configured, alone or in combination with the above further configurations, wherein the system is a user device, the first level sensor information indicates conditions related to the user device and the sensor control module is to determine whether it is appropriate to activate second level payment system sensors in the user device based on the conditions related to the user device. In this configuration the example system may be further configured, wherein the conditions related to the user device indicate whether or not a user device has been withdrawn from a storage location.

In another example there is provided a method. The method may include receiving first level sensor information from at least one first level sensor, determining whether the first level sensor information indicates that an event has been sensed, and controlling operation of at least one second level sensor based on the determination of whether the first sensor information indicates that the event has been sensed.

The above example method may be further configured, alone or in combination with the above further configurations, wherein the first level sensor information indicates at least one of temperature, illumination, sound, proximity, touch, movement, acceleration, orientation, tilt or presence of wireless communication signals.

The above example method may be further configured, alone or in combination with the above further configurations, wherein controlling operation of the at least one second level sensor comprises activating the at least one second level sensor based on the determination that the first sensor information indicates that the event has been sensed.

The above example method may further comprise, alone or in combination with the above further configurations, receiving second level sensor information from the at least one second level sensor, and determining whether the second level sensor information indicates that the event is complete. In this configuration the above example method may be further configured, wherein controlling operation of the at least one second level sensor comprises deactivating the at least one second level sensor based on the determination that the second level sensor information indicates that the detected event is complete.

The above example method may be further configured, wherein the at least one first level sensor, when operational, consumes less power than the at least one second level sensor, when operational.

The above example method may be further configured, alone or in combination with the above further configurations, wherein the first level sensor information indicates conditions related to a user device, the event relates to whether the user device has been withdrawn from a storage location, and controlling the operation of at least one second level sensor includes controlling the activation of payment system sensors based on whether the first level sensor information indicates that the user device has been withdrawn from the storage location.

In another example there is provided a system comprising first level sensors, second level sensors and a sensor control module, the system being arranged to perform any of the above example methods.

In another example there is provided a chipset arranged to perform the method of any of the above example methods.

In another example there is provided at least one machine readable medium comprising a plurality of instructions that, in response to be being executed on a computing device, cause the computing device to carry out any of the above example methods.

In another example there is provided a device configured with sensor hierarchy arranged to perform any of the above example methods.

In another example there is provided a device having means to perform any of the above example methods.

In another example there is provided at least one machine-readable storage medium having stored thereon individually or in combination, instructions that when executed by one or more processors result in the system carrying out any of the above example methods.

In another example there is provided a system. The system may include at least one first level sensor to generate first level sensor information based on sensing an event, at least one second level sensor, and a sensor control module to control operation of the at least one second level sensor based on the first level sensor information.

The above example system may be further configured, wherein the at least one first level sensor is further to sense at least one of temperature, illumination, sound, proximity, touch, movement, acceleration, orientation, tilt, condition change or presence of wireless communication signals.

The above example system may be further configured, alone or in combination with the above further configurations, wherein the at least one second level sensor is to sense at least one of sense image information, sense video information or receive wireless communication signals.

The above example system may be further configured, alone or in combination with the above further configurations, wherein the sensor control module is further to activate the at least one second level sensor based on the first level sensor information indicating the sensing of an event.

The above example system may be further configured, alone or in combination with the above further configurations, wherein the at least one second level sensor is to generate second level sensor information based on sensing related to the event, the sensor control module being also to deactivate the at least one second level sensor based on the second level sensor information indicating that the sensed event is complete.

The above example system may be further configured, alone or in combination with the above further configurations, wherein the at least one first level sensor, when operational, consumes less power than the at least one second level sensor, when operational.

The above example system may be further configured, alone or in combination with the above further configurations, wherein the at least one first level sensor comprises a single sensor and the at least one second level sensor comprises a plurality of sensors.

In another example there is provided a method. The method may include receiving first level sensor information from at least one first level sensor, determining whether the first level sensor information indicates that an event has been sensed, and controlling operation of at least one second level sensor based on the determination of whether the first sensor information indicates that the event has been sensed.

The above example method may be further configured, wherein the first level sensor information indicates at least one of temperature, illumination, sound, proximity, touch, movement, acceleration, orientation, tilt or presence of wireless communication signals.

The above example method may be further configured, alone or in combination with the above further configurations, wherein controlling operation of the at least one second level sensor comprises activating the at least one second level sensor based on the determination that the first sensor information indicates that the event has been sensed.

The above example method may further comprise, alone or in combination with the above further configurations, receiving second level sensor information from the at least one second level sensor, determining whether the second level sensor information indicates that the event is complete, and deactivating the at least one second level sensor based on the determination that the second level sensor information indicates that the detected event is complete.

The above example method may be further configured, alone or in combination with the above further configurations, wherein the at least one first level sensor, when operational, consumes less power than the at least one second level sensor, when operational.

In another example there is provided a chipset arranged to perform any of the above example methods.

In another example there is provided at least one machine readable medium comprising a plurality of instructions that, in response to be being executed on a computing device, cause the computing device to carry out any of the above example methods.

In another example there is provided a device configured with sensor hierarchy arranged to perform any of the above example methods.

In another example there is provided a system. The system may include at least one first level sensor to generate first level sensor information based on sensing an event, at least one second level sensor, and a sensor control module to control operation of the at least one second level sensor based on the first level sensor information.

The above example system may be further configured, wherein the at least one first level sensor is further to sense at least one of temperature, illumination, sound, proximity, touch, movement, acceleration, orientation, tilt, condition change or presence of wireless communication signals.

The above example system may be further configured, alone or in combination with the above further configurations, wherein the at least one second level sensor is to sense at least one of sense image information, sense video information or receive wireless communication signals.

The above example system may be further configured, alone or in combination with the above further configurations, wherein the sensor control module is further to activate the at least one second level sensor based on the first level sensor information indicating the sensing of an event.

The above example system may be further configured, alone or in combination with the above further configurations, wherein the at least one second level sensor is to generate second level sensor information based on sensing related to the event. In this configuration the example system may be further configured, wherein the sensor control module is further to deactivate the at least one second level sensor based on the second level sensor information indicating that the sensed event is complete.

The above example system may be further configured, alone or in combination with the above further configurations, wherein the at least one first level sensor, when operational, consumes less power than the at least one second level sensor, when operational.

The above example system may be further configured, alone or in combination with the above further configurations, wherein the at least one first level sensor comprises a single sensor and the at least one second level sensor comprises a plurality of sensors.

The above example system may be further configured, alone or in combination with the above further configurations, wherein the system is a user device, the first level sensor information indicates conditions related to the user device and the sensor control module is to determine whether it is appropriate to activate second level payment system sensors in the user device based on the conditions related to the user device. In this configuration the example system may be further configured, wherein the conditions related to the user device indicate whether or not a user device has been withdrawn from a storage location.

In another example there is provided a method. The method may include receiving first level sensor information from at least one first level sensor, determining whether the first level sensor information indicates that an event has been sensed, and controlling operation of at least one second level sensor based on the determination of whether the first sensor information indicates that the event has been sensed.

The above example method may be further configured, alone or in combination with the above further configurations, wherein the first level sensor information indicates at least one of temperature, illumination, sound, proximity, touch, movement, acceleration, orientation, tilt or presence of wireless communication signals.

The above example method may be further configured, alone or in combination with the above further configurations, wherein controlling operation of the at least one second level sensor comprises activating the at least one second level sensor based on the determination that the first sensor information indicates that the event has been sensed.

The above example method may further comprise, alone or in combination with the above further configurations, receiving second level sensor information from the at least one second level sensor, and determining whether the second level sensor information indicates that the event is complete. In this configuration the above example method may be further configured, wherein controlling operation of the at least one second level sensor comprises deactivating the at least one second level sensor based on the determination that the second level sensor information indicates that the detected event is complete.

The above example method may be further configured, wherein the at least one first level sensor, when operational, consumes less power than the at least one second level sensor, when operational.

The above example method may be further configured, alone or in combination with the above further configurations, wherein the first level sensor information indicates conditions related to a user device, the event relates to whether the user device has been withdrawn from a storage location, and controlling the operation of at least one second level sensor includes controlling the activation of payment system sensors based on whether the first level sensor information indicates that the user device has been withdrawn from the storage location.

In another example there is provided a system. The system may include means for receiving first level sensor information from at least one first level sensor, means for determining whether the first level sensor information indicates that an event has been sensed, and means for controlling operation of at least one second level sensor based on the determination of whether the first sensor information indicates that the event has been sensed.

The above example system may be further configured, wherein the first level sensor information indicates at least one of temperature, illumination, sound, proximity, touch, movement, acceleration, orientation, tilt or presence of wireless communication signals.

The above example system may be further configured, alone or in combination with the above further configurations, wherein controlling operation of the at least one second level sensor comprises activating the at least one second level sensor based on the determination that the first sensor information indicates that the event has been sensed.

The above example system may further comprise, alone or in combination with the above further configurations, means for receiving second level sensor information from the at least one second level sensor, and means for determining whether the second level sensor information indicates that the event is complete. In this configuration the example system may be further configured, wherein controlling operation of the at least one second level sensor comprises deactivating the at least one second level sensor based on the determination that the second level sensor information indicates that the detected event is complete.

The above example system may further comprise, alone or in combination with the above further configurations, wherein the at least one first level sensor, when operational, consumes less power than the at least one second level sensor, when operational.

The above example method may be further configured, alone or in combination with the above further configurations, wherein the first level sensor information indicates conditions related to a user device, the event relates to whether the user device has been withdrawn from a storage location, and controlling the operation of at least one second level sensor includes controlling the activation of payment system sensors based on whether the first level sensor information indicates that the user device has been withdrawn from the storage location.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents.

The following section of the description consists of numbered paragraphs simply providing statements of the invention already described herein. The numbered paragraphs in this section are not claims, the claims are set forth below in the later section headed "claims".

## Claims

1. A system, comprising:
a first sensor (106) to generate information about an event (102);
a second sensor (110) to generate information about the event; and
control circuitry to control the second sensor based, at least in part, on the information about the event generated by the first sensor;
wherein the control circuitry activates the second sensor responsive, at least in part, to receipt of information about the event from the first sensor; and
wherein the control circuitry deactivates the second sensor responsive to receiving information indicative of a completion of the event.

2. The system of claim 1:
wherein the first sensor comprises a motion sensor;
wherein the second sensor comprises a motion sensor; and
wherein the event comprises movement of a subject sensed by the first sensor and the second sensor.

3. The system of claim 1 wherein the control circuitry to control the second sensor based, at least in part, on the information about the event generated by the first sensor comprises control circuitry that:
controls the second sensor based, at least in part, on the information generated by the first sensor that includes information in the form of a signal based on at least one of temperature, illumination, sound, proximity, touch, movement, acceleration, orientation, tilt, condition change or presence of wireless signals.

4. The system of any of claims 1-3 wherein the control circuitry to control the second sensor based, at least in part, on the information generated by the first sensor comprises control circuitry that:
controls the second sensor based, at least in part, on the information generated by the first sensor that includes information in the form of a bit or signal indicative of the event.

5. The system of any of claims 1-4 wherein the control circuitry comprises:
circuitry capable of executing machine-readable instruction sets, the machine-readable instruction sets to cause the control circuitry to selectively activate the second sensor based, at least in part, on a content of the information about the event generated by the first sensor.

6. The system of any of claims 1-5 wherein the control circuitry to control the second sensor based, at least in part, on the information about the event generated by the first sensor comprises control circuitry that:
supplies power to the second sensor responsive to receipt of the information about the event.

7. The system of any of claims 1-6 wherein the control circuitry that deactivates the second sensor responsive to receiving information indicative of a completion of the event comprises control circuitry that:
interrupts power to the second sensor responsive to receiving information indicative of the completion of the event.

8. A method, comprising:
receiving, by control circuitry, information about an event from a communicably coupled first sensor;
activating, by the control circuitry, a second sensor responsive to receipt of the information about the event from the first sensor;
deactivating, by the control circuitry, the second sensor responsive to receipt of information from the second sensor indicative the event is complete.

9. The method of claim 8 wherein receiving information about an event from a communicably coupled first sensor comprises:
receiving, by control circuitry, information indicative of a movement from a communicably coupled first motion sensor.

10. The method of any of claims 8-9 wherein receiving information about an event from a communicably coupled first sensor comprises:
receiving, by the control circuitry, information in the form of a bit or signal indicative of an occurrence of the event from the first sensor.

11. The method of any of claims 8-10 wherein receiving information about an event from a communicably coupled first sensor comprises:
receiving, by the control circuitry, information in the form of a signal indicative of a first aspect of the event from the first sensor.

12. The method of any of claims 8-11 wherein activating a second sensor responsive to receipt of the information about the event from the first sensor comprises:
selectively activating, by the control circuitry, the second sensor responsive to a content of the information about the event received from the first sensor.

13. The method of any of claims 8-12 wherein activating a second sensor responsive to receipt of the information about the event from the first sensor comprises:
supplying, by the control circuitry, power to the second sensor responsive to receipt of the information about the event from the first sensor.

14. The method of any of claims 8-13 wherein deactivating the second sensor responsive to receipt of information from the second sensor indicative the event is complete comprises:
interrupting, by the control circuitry, the power to the second sensor responsive to receipt of information from the second sensor indicative the event is complete.

15. A storage device that includes machine-readable instructions, that when executed by control circuitry, cause the control circuitry to:
receive information indicative of an occurrence of an event from a first sensor;
activate a second sensor responsive to receipt of the information indicative of the occurrence of the event from the first sensor; and
deactivate the second sensor responsive to receipt of information indicative of a completion of the event.
